Europäisches Patentamt

European Patent Office

Office européen des brevets

(11) Publication number: **0 227 893 B1**

# EUROPEAN PATENT SPECIFICATION

(45) Date of publication of patent specification: **07.04.93** (51) Int. Cl.⁵: **C22B 3/00**, C02F 1/00

(21) Application number: **86112728.0**

(22) Date of filing: **15.09.86**

(54) Method of removing metal contaminants from solutions.

(30) Priority: **16.09.85 US 776346**
**16.09.85 US 776348**
**16.09.85 US 776347**

(43) Date of publication of application:
**08.07.87 Bulletin 87/28**

(45) Publication of the grant of the patent:
**07.04.93 Bulletin 93/14**

(84) Designated Contracting States:
**AT BE DE FR GB IT NL SE**

(56) References cited:
EP-A- 0 047 962      EP-A- 0 215 346
GB-A- 2 013 135      US-A- 3 468 816
US-A- 3 489 699      US-A- 3 493 498
US-A- 3 565 833      US-A- 3 801 551
US-A- 4 060 465      US-A- 4 078 978
US-A- 4 083 782      US-A- 4 119 508
US-A- 4 120 653      US-A- 4 405 574
US-A- 4 405 576      US-A- 4 415 677
US-A- 4 415 678      US-A- 4 448 693

CHEMICAL ABSTRACTS, vol. 87, 1977, page
62, abstracgt no. 86126b, Columbus, Ohio,
US

(73) Proprietor: **THE DOW CHEMICAL COMPANY**
**2030 Dow Center Abbott Road P.O. Box 1967**
**Midland Michigan 48640-1967(US)**

(72) Inventor: **Vaughn, Walter Lee**
**307 Poinsettia**
**Lake Jackson Texas 77566(US)**
Inventor: **Burney, Harry S.**
**303 Four Oak Drive**
**Clute Texas 77531(US)**
Inventor: **Spradling, Robert D.**
**142 Oyster Creek Drive**
**27, Lake Jackson Texas 77566(US)**
Inventor: **Frable, Robert R.**
**3701 North Eastman Road**
**Midland Michigan 48640(US)**
Inventor: **Guerra, Rafael E.**
**142 Oyster Creek Apt. 6**
**Lake Jackson Texas 77566(US)**
Inventor: **Wing, Milton Silas**
**108 Lazy Lane**
**Lake Jackson Texas 77566(US)**

(74) Representative: **Casalonga, Axel et al**
**BUREAU D.A. CASALONGA - JOSSE Morassistrasse 8**
**W-8000 München 5 (DE)**

CHEMICAL ABSTRACTS, vol. 89, 1978, page 59, abstract no. 198802s, Columbus, Ohio, US

CHEMICAL ABSTRACTS, vol. 107, 1987, page 128, abstract no. 136466s, Columbus, Ohio, US

## Description

The present invention relates to a method of removing metal contaminants from solutions using an ethylene polymer having pendant acid carboxylic groups including removal of alkaline earth metal ions (hardness values) from alkali metal brine and removal of impurities from a fluid amine.

There is a need to remove hardness values, especially $Mg^{++}$ and $Ca^{++}$, from brines, especially NaCl solutions, where such brine is intended for uses in which the hardness values are detrimental. One notable use of NaCl brines is that wherein the brine is used as an electrolyte, e.g., as a feed material to an electrolysis cell, such as a chlorate cell or a chlor-alkali cell. Other brines include LiCl solutions, KCl solutions and other alkali metal brines.

The use of chelating-type ion exchange resins for removing hardness values from brine is disclosed, for example, in U.S. Patent Nos. 4,060,465 and 4,119,508. Other patents disclosing brine treatment are, e.g., U.S. Patent Nos. 4,405,574; 4,405,576; 4,415,678; and 4,415,677.

Ethylene polymerized with unsaturated organic carboxylic acids, e.g., acrylic acid, to form copolymers is taught, e.g., in U.S. Patent Nos. 2,391,218; 3,520,861; and 4,351,931. Copolymers of ethylene and such acids can be made by grafting the acid onto polyethylene, by batch or continuous polymerization of mixtures of monomers of ethylene and the acid, by polymerization of mixtures of monomers of ethylene and the acid in a tubular reactor, and by hydrolysis of copolymers of ethylene/alkyl acrylates which converts the ester groups to carboxylic acid groups. Also, block copolymers can be made whereby chain segments of polyacrylic acid and chain segments of polyethylene form long polymer chains. Any of these known ethylene/acid copolymers are at least somewhat usable in the present invention, so long as they can be formed into solid particles, fibers or filaments. Thus, the purview of the present disclosure includes ethylenic polymers containing a plurality of carboxylic acid groups in their molecular structure, especially the homogeneous, compositionally uniform, random copolymers such as prepared in accordance with U.S. Patent Nos. 3,520,861 and 4,351,931.

U.S. Patent No. 3,801,551 is closely related in subject matter to the present invention, since it shows preparation of ethylene/unsaturated carboxylic acid copolymer (ECA) fibers; also U.S. Patent Nos. 3,790,521 and 3,798,194 are related subject matter. Each discloses treatment of ethylenic polymers containing carboxylic acid groups with an alkaline material in order to obtain certain results, such as the making of fibers, non-colloidal particles, or colloidal particles by digesting particles of the polymers in an alkaline material, followed by shearing.

Whereas such above forms of the polymers are only to a certain extent operable in the invention described hereinafter, there has now been found a novel method of producing high surface area polymers (e.g. EAA) wherein the particles and fibers are large enough to be more easily managed than the colloidal sizes, and more efficient than the fine fibers of the above-discussed patents. In accordance with this novel polymer preparation, there is prepared particles and fibers which are highly porous, having a substantial amount of microporosity, thereby providing very high surface areas per bulk volume of the particles. This novel preparation is discussed more fully hereinafter.

It has been more recently discovered that there are unexpected improvements resulting from a change in the known process of forming fibers of polymers such as ethylene/carboxylic acid copolymers (ECA), said known process being that of digesting particles of the polymer in alkaline material and then subjecting the so-treated polymer to shearing forces to cause fibrillation or particulation of the polymer particles. The said change in the process involves, as the principal distinguishing feature, the orientation (i.e. "stretching") of the polymer (before treating with a reagent) at a temperature below that at which stress-relaxation of the stretched polymer molecules is substantially encountered; this may be referred to as "cold-Stretching" or "crystalline orientation".

It is customary, in some production processes, for polymers leaving a polymerization vessel to be melt-extruded through a die as strands, which are chopped into pellets and cooled in a water bath. U.S. Patent No. 3,801,551 discloses that such pellets may then be digested in alkaline material and then fibrillated using shearing forces. Since the strands are cut into pellets before the strands have cooled to the point at which crystallization occurs, then stress relaxation of the polymer molecules permits intertwining of the molecules. When such pellets are treated in accordance with U.S. Patent No. 3,801,551 to prepare fibers, the fibers are relatively short and have very little porosity, if any. Polymers produced as small particles may also be melted, extruded as strands, and chopped into pellets before the intended end-use.

It has been found that if the extruded strands of polymer are allowed to cool to an extent, and for a time, sufficient to allow an appreciable amount of crystallization to occur and are then cold-stretched (oriented), the crystallized molecules become substantially untwined and become substantially aligned in parallel relationship with the direction of orientation. This also draws the strands to narrower dimensions.

Since the polymer, when oriented, is cold enough for the molecules to be crystallized, and not warm enough to allow stress-relaxation of the molecules, then the molecules remain dimensionally stable after the orientation is completed. When these oriented strands are treated with a reagent (e.g. 0.5N NaOH) and subjected to shearing or crushing, the strands undergo fibrillation into fibers which are extensively porous. Most of the pores are small enough to be considered micropores. These micropores permeate the length and breadth of the fibers. Even if the oriented strands are chopped into pellets before being treated with alkali and subjected to shearing or crushing, the so-formed fibers are extensively porous and are longer than fibers prepared from pellets of the same dimensions treated in accordance with U.S. 3,801,551.

This same phenomenon is observed when cold oriented films or strips are treated with alkali and sheared or crushed into fibers, and to a greater degree than when using films which are stretched at high temperatures where stress relaxation of the polymer molecules is possible. These recently discovered highly porous fibers and particles are the subject of co-filed U.S. Patent Application Serial No. 776,534, filed on even date herewith. These highly porous fibers and/or particles are especially preferred due to their high efficiency in scavenging metal ions.

As used herein, the term "melt index" (M.I.) refers to the melt flow rate value measured in accordance with ASTM D-1238.

The present invention concerns a method for removing metal contaminants from an aqueous and/or organic liquid characterized by

(a) contacting said aqueous and/or organic liquid with an ethylene polymer having pendent carboxylic acid groups (ECA) in at least 1 meq./g or pendent carboxylic acid groups in the salt form said polymer being in microporous fibrous or particulate form and exhibiting a surface area/weight ratio of at least 0.5 $m^2$/g, for a time sufficient to cause the metal values to affix to the polymer, and

(b) separating the liquid from the polymer.

In one embodiment, this invention is a method of removing metal contaminants from solution in aqueous and/or organic liquids, characterized by

(a) contacting the said liquids with an ethylene polymer having pendent carboxylic acid groups or pendent carboxylic acid groups in the salt form, said polymer being in microporous, particulate form and having a surface area/ weight ratio of at least about 0.5$m^2$/g, for a time sufficient to cause the metal values to affix to the polymer, and

(b) separating the liquid from the polymer.

In another embodiment, the aqueous and/or organic liquid is a fluid amine comprising tertiary amine or quaternary amine salt,

the pendant carboxylic acid groups are the alkali salt form, and said copolymer is in microporous, particulate form having a surface area/weight ratio of at least 1 $m^2$/g.

Still in another embodiment, this invention is a method for removing alkaline earth metal values and other polyvalent metal cations from an alkali metal salt brine, characterized by

(a) the ethylene polymer having pendent carboxylic acid groups,

b) said polymer being in microporous fibrous or particulate form and having a surface area weight ratio of at least 2$m^2$/g.

Elements of the following groups of The Periodic Table of the Elements, when in cation form, are within the ambit of the present invention, and are taken up by the ECA copolymer particles and fibers having microporosity, including particles and fibers which have been conjoined into a contiguous, but highly porous configuration:

| Group | Especially These Metals |
|-------|-------------------------|
| IA | Li, Na, K, Rb |
| IB | Cu, Ag, Au |
| IIA | Mg, Ca, Sr, Ba |
| IIB | Zn, Cd, Hg |
| IIIA | Al, Ga, In |
| IIIB* | Sc, Y, La, Ce, U |
| IVA | Ge, Sn, Pb |
| IVB | Ti, Zr, Hf |
| VA | As, Sb, Bi |
| VB | V, Nb, Ta |
| VIA | Se, Te |
| VIB | Cr, Mo, W |
| VIIB | Mn, Re |
| VIII | Fe, Co, Ni, Ru, Rh, Pd, Os, Ir, Pt |

*including the lanthanide and actinide series

Throughout this disclosure, alkaline earth metals are those of Groups IIA of the Periodic Table of the Elements, especially Mg and Ca. The alkali metals are those of Group I, especially Li, Na, and K, most especially Na.

There are various liquids which contain metal values which are desirably removed. These liquids may be organic or aqueous or a mixture of organic and aqueous. The liquid may be an alkali metal halide aqueous solution or a fluid form or solution of an amine compound, especially, a tertiary amine or a quarternary ammonium salt such as tetraalkylammonium halide or 1-halo-2-hydroxyalkyl-trialkylammonium halide compounds. The liquid may be a waste stream which requires metal removal before being conveyed to public waters, it may be, e.g., a product stream, a by-product stream, a process feed stream, or an intermediate process feed stream between process stages. There is an ever-present need to find better, more efficient methods for removing metals from such streams, whether such metals are merely contaminants, or are additives which may have been part of the process. In some streams there is a need for efficient ways of removing a broad spectrum of metals, preferably in a single operation. Spills from leaky or broken vessels, which contain metal values, often require clean-up to remove the metals to a safer or better place.

The present invention provides the means for taking up, and chemically holding, such metal values.

The liquid, from which one desires to remove metal cations, is preferably one which is substantially inert to the ECA polymer. As used herein, an "inert" liquid is one which does not substantially react with, or dissolve, the ECA polymer. Some liquids (especially when hot) may swell the ECA polymer, or be somewhat imbibed by the ECA polymer, yet the polymer can still function, repeatedly, as a metal cation removal agent.

It is possible, however, to melt or dissolve the ECA polymer in a hot solvent which contains polyvalent metal cations wherein the polymer reacts and holds the metal cations. Then upon precipitation of the polymer by addition of a non-solvent and/or by chilling the solution, the polymer will generally form a solidified agglomerate (unless shearing agitation is employed to cause dispersion). The precipitated polymer can then be separated from the liquid, taking the metal values with it, but may not be efficiently employed again without reforming it as a high surface area polymer.

Quaternary ammonium salts are known to be produced by reacting a tertiary amine with a possibly substituted alkyl compound RX, producing compounds of the formula $R_4NX$, where R represents alkyl and/or substituted alkyl groups and X is, e.g., a halide, nitrate, sulfate, hydroxyl, sulfite, nitrite, thiosulfate, and carbonate, or mixtures of these. The R groups may all be the same, or may be different, some or all of which may be substituted. An example is a 1-halo-2-hydroxyalkyl-trialkyl ammonium halide, such as 1-chloro-2-hydroxypropyl-trimethyl ammonium chloride. These compounds are highly polar, leading to an affinity for impurities which are usually found in the quaternary products when made under commercial conditions; these impurities, which usually cause an undesirable color, are generally difficult to remove efficiently. Among the principal impurities which find their way into the system are metal compounds such as various forms of iron, e.g., rust particles, soluble ferric ion, and particulate iron silicates. Other impurities include, e.g., $Cr^{+++}$, $Cu^{++}$, $Zn^{++}$, $Mg^{++}$, $Ca^{++}$, $Al^{+++}$, and the like.

The use of various filters and ion exchangers for removing the impurities have not been entirely satisfactory and more efficient methods and materials have been sought.

Whereas this disclosure is directed principally to the preferred quaternary ammonium salts, it is within the purview of the invention to cleanse other amines, especially tertiary amines such as trimethylamine, triethylamine, and the like. Furthermore salt forms of quaternary compounds other than halides may be used, such as nitrates and sulfates and the like.

For purposes of conciseness herein, the ethylenic polymers containing carboxylic acid groups are referred to as ethylene-carboxylic acid (ECA) polymers. This includes those made by grafting techniques, by block copolymerization, by random interpolymerization in tubular reactors or in batch reactors, but is especially directed to compositionally uniform, random, homogeneous copolymers such as prepared in a constant environment in a stirred autoclave, such as in accordance with U.S. Patent Nos. 3,520,861 and 4,351,931. The carboxylic acid groups in the ECA polymers may be provided by way of unsaturated carboxylic acids which are copolymerizable with ethylene, such as acrylic acid, methacrylic acid, butenoic acid, crotonic acid, maleic acid, itaconic acid, fumaric acid, and the like. The term "ethylenic polymers" is used here to express the polymeric chain which includes the carboxylic acid groups as side-groups. Aside from the ethylene and carboxylic acids which constitute the major portion of the ECA polymers, there may also be a minor amount of other monomeric or reactive materials included in the polymer, such as higher olefins having from 3 to 12 carbon atoms, telogens, chain regulators, or organic cross-linking agents. Furthermore, there may be more than one of the said "other" materials and there may be more than one of the carboxylic acids. The polymer which is subjected to the orientation and fibrillation process may be a blend of polymers, so long as there is enough of the carboxylic acid groups in the total blend to provide the amount needed for the fibrillation process. Ethylene/acrylic acid copolymers (EAA) and ethylene/methacrylic acid copolymers (EMAA) are especially preferred.

For the purpose of removing impurities from the amine compound, an alkali salt of an ethylene/unsaturated carboxylic acid polymer (ECA) can be used. The alkali salt of the acid groups on the polymer may be the amine salt, the ammonium salt, or the alkali metal salt.

As stated supra, various forms of the ethylene/acid polymers may be used including (but not limited to) those produced by the techniques in U.S Patent Nos. 3,798,194, 3,790,521, and 3,801,551. A particularly effective and preferred form is the novel porous form prepared in accordance with cofiled U.S. Patent Application Serial No. 776,534. Stated simply, the porous polymers are prepared by reacting cold-drawn (oriented) polymer with a reagent which reacts with the reactable pendant side-groups on the polymer (such as -COOH groups), causing swelling of the polymer; then after fibrillation and washing, the fibers are found to be extensively microporous, a substantial amount of the pores being of sub-micron size. This porosity and microporosity is an especially useful feature in the present invention, most especially when the polymer is used in the dual role of scavenger or chelating ion-exchanger and filter.

For the purposes of removal of alkaline earth metal values from brine, the amount of carboxylic acid groups in the ethylenic polymers should be at least 1 millequivalents (meq.) per gram of the ECA polymer, preferably at least 1.5 meq., most preferably 2 to 4 meq. At below about 1 meq. there is generally not enough carboxylic acid groups to efficiently provide the effect desired by the treatment with the alkaline material which produces the ability to fibrillate under shear. At above 5 meq. there may be an overabundance of carboxylic acid groups which can lead to excessive fragmentation of the polymer molecules during treatment with the alkaline material, followed by shearing; or in some cases an overabundance of carboxylic groups can cause the ECA to perform somewhat like a homopolymer of the acid and undergo substantial dissolution in a strong alkaline solution.

The ECA polymers are generally solid at ambient temperature. The molecular weight of the ECA for use in making fibers from cold-stretched strands or sheets may vary over a broad range, as indicated by measurement using the procedure of ASTM D-1238 which measures the melt flow rate value at a given temperature through a prescribed orifice under the pressure of a prescribed weight. This melt flow rate value (MFR) is sometimes called melt index (M.I.). An MFR value in the range of 5g/10 min. to 3000g/10 min. is generally operable, preferably in the range of 15g/10 min. to 1500g/10 min., most preferably 15g/10 min. to 500g/10 min.

For the purpose of removing metal ions from liquids, the amount of the acid groups in the polymer may vary over a wide range of 10 percent to 40 percent by weight, preferably 14 percent to 35 percent, most preferably 20 percent to 35 percent.

When employed as a colloidal or very fine suspension in water, the alkali metal, ammonium, or monovalent organic cation of an ECA copolymer salt is found to exchange with the non-alkali metal cations in a metal-containing solution, thereby forming flocs. These flocs are then filtered out, or otherwise removed, from the solution, taking the metal cations with them. When employed as larger particles or as

6

fibers added to the metal-containing solution, these also by ion-exchange, take on the non-alkali metal cations and are filtered out, or otherwise removed, from the solution.

The surface area/weight ratio of such porous polymers is at least $0.5m^2/g$, preferably at least $2m^2/g$ and can be as much as $15m^2/g$ or more, depending on concentration of -COOH groups in the copolymer, the extent of cold stretching, and the thoroughness of the reaction with the reagent (such as NaOH).

For removal of impurities from the amine solution, the polymers generally have a number average molecular weight of at least 6000 and a weight average molecular weight of at least 16000, and generally exhibit a melt flow rate (MFR) in the range of 15-2600 g/10 min. as measured in accordance with ASTM D-1238. A typical MFR of 300 ± 100 g/10 min. is quite suitable.

For removing impurities from the amine solution, the amount of the acid groups in the polymer may vary over a wide range of 8 percent to 40 percent by weight, preferably 12 percent to 40 percent, most preferably 20 percent to 40 percent.

When employed as a colloidal or very fine suspension in water, the alkali salt of the ethylene/acid polymer is found to chemically react with, and form flocs with, the impurities in the amine solution; these flocs are then filtered out, or otherwise removed, from the solution, taking the impurities with them. When employed as larger particles or as fibers added to the amine solution, these also chemically react with the impurities and are filtered out, or otherwise removed, from the solution, taking the impurities with them. Particulate sizes having surface area/weight ratio of at least $1 m^2/g$ should be used, preferably greater than $5m^2/g$.

Fibrous arrays, such as beds or mats, can serve the dual role of filter (for "non-attachable" impurities) and as a scavenger or chelant for the "attachable" impurities; thus inert solid impurities as well as reactive solid impurities and dissolved impurities are removed. Woven, non-woven, knitted, or sintered arrays of fibers or filaments may be used.

The temperature used in the present invention may be any convenient temperature below the softening point of the polymer and the decomposition or degradation or boiling temperature of the metal-containing solution, the amine or amine solution. Operating at temperatures at which the polymer melts or fuses, or at temperatures at which the metal-containing solutions, the amine or amine solution is not stable, would be counterproductive. One would not, of course, want to use temperatures at which the metal-containing solution, the amine or amine solution is frozen or non-fluid. Satisfactory results are obtained at ambient, or near ambient, conditions.

The amount of polymer used in removing the impurities from the amine should be commensurate with the concentration of impurities in the amine, for a given polymer. The extent to which the polymer can scavenge impurities is directly related to the concentration of the acid groups pendant from the polymer molecule. It is preferred to use polymers which contain at least 12 percent by weight of acid groups, most preferably 20 to 40 percent. If the first treatment with polymer is found to have given incomplete removal of impurities, due to use of too small an amount, then one or more further treatments can be easily done to essentially remove the impurities to at least a tolerable level. Highly efficient removal of impurities is achieved by passing the amine through a bed, column, or other array of the polymer, either upflow or downflow or crossflow. Highly efficient removal of impurities is also achieved by mixing the polymer into the amine, then filtering out the polymer or decanting the amine.

We have found that novel "quat acrylate copolymers" are formed as intermediates when the quaternary ammonium salts are combined by reaction, or ion exchange, with the ethylene/acid polymers when the acid groups are in the form of an alkali salt. For example, an ethylene/ammonium acrylate copolymer reacts with 1-chloro-2-hydroxypropyl-trimethyl ammonium chloride to form ethylene/1-chloro-2-hydroxypropyl-trimethylammonium acrylate copolymer (swollen in size from the original polymer) and a side-product, ammonium chloride. This reaction occurs even in the presence of a contaminating amount of iron. Some of these enlarged (swollen) "quat acrylate copolymer" particles then chemically react with the iron compounds, which puts a corresponding amount of 1-chloro-2-hydroxy-propyl-trimethylammonium ions back into solution and puts the iron into the polymers for easy removal. This phenomenon provides a novel convenient process whereby a neatly prepared "quat acrylate copolymer" can be added to a contaminated quaternary ammonium salt in an amount calculated or determined to correspond to the theoretical amount needed to react with the metal impurities in the quaternary ammonium salt; then by exchange of ions, the metal groups attach to the acid groups as the quaternary groups come off the acid groups and go into solution. This novel technique is especially effective when the ethylene/acid polymer is of the high-porosity variety, whereby a much greater percent of the acid groups are stoichiometrically available for the reactions involved. Non-porous, relatively large particles of the ethylene/acid copolymer are likely to have acid groups within the interior of the particle which may no be "reached" by the reactants.

These ECA polymers, especially the microporous fibers, may be used in the dual role of filter (to filter out solids), and ion exchanger (to take up soluble polyvalent metals) when made into appropriate arrays as woven, non-woven, sintered, knitted or other suitable articles.

Whereas virtually any alkali metal brine may be substantially cleansed of "hardness" ions and other polyvalent metal cations, within the purview of the present invention, there is a particular brine, NaCl, which is especially in need of purification; this particular brine is used as cell feed to an electrolytic process wherein a NaCl electrolyte is electrolytically decomposed to produce NaOH and $H_2$ at the cathode and $Cl_2$ at the anode. The discussions and examples which follow deal, in particular; with the preferred NaCl brine, though various other brines would be expected to be applicable for their various purposes.

In carrying out the present invention, the aqueous brine is contacted with high surface area (at least $2m^2/g$) ECA polymers (esp. EAA or EMAA). The ECA may be in the form of particles, e.g., powders, chopped fibers or small beads, especially when fashioned into forms which are readily separated from the brine. Ambient temperatures are suitable, though sub-ambient or super-ambient temperatures may be used, so long as the brine is in liquid form (not frozen or gelled and not above boiling). Also, temperatures below the melting or fusion point of the ECA polymer should be used.

The contacting may be done by passing the brine through a stationary array of the ECA polymer particles, or by mixing the particles into the brine, then filtering out the particles or decanting the brine from the particles.

In contradistinction to previous commercially-available chelating-type resins and ion-exchange beads, which generally are useful only at certain pH's, the ECA polymers are effective at acid and basic pH's and are not expensive. Many ion-exchange beads are not effective in removing $Ca^{++}$ or $Mg^{++}$ from saturated NaCl, KCl, or LiCl solutions.

These ECA polymers are regenerated to get back to the active -COOH groups by using a mineral acid (especially HCl) to remove the polyvalent metal ions which the polymers have removed from brine. The regeneration efficiency is sufficiently high to obtain numerous loading/unloading cycles.

A typical operation temperature for using ECA to purify NaCl brine would involve 10° to 60°C, a raw brine hardness concentration of 0.5 to 500 ppm (as $Ca^{++}$), a space velocity of 0.5-50/hour through a column containing the ECA particles, and a brine feed pH in the range of 3 to 13.

The amount of polymer used in removing the metals from the solution should be commensurate with the concentration of the metals in the solution, for a given polymer. The extent to which the polymer can chelate with or attach to the metals is directly related to the concentration of the acid groups pendant from the polymer molecule. It is preferred to use polymers which contain at least 10 percent by weight of acid groups, preferably 20 to 35 percent, though polymers containing as much as 40 percent or more are contemplated here. If the first treatment with polymer is found to have given incomplete removal of the metals, due to use of too small an amount, then one or more further treatments can be easily done to essentially remove the metals to at least a tolerable level. Highly efficient removal of metals is achieved by passing the solution through a bed or column of the polymer, either upflow or downflow or crossflow. Highly efficient removal of metals is also achieved by mixing the polymer into the solution, then filtering out the polymer or decanting the solution.

Of special interest within the purview of the present invention are polyvalent heavy metals, especially those of a valence of 2 or 3, which are desirably removed from solutions, though other polyvalent metals are also removed. For example, Al, Zn, V, Ni, Sr, Fe, Mn, Co, Pb, Cr, Cu, Ti, Ca, Mg, Ba, Ag, Au, Pd, Ir, Ru, As, Cd, Hg, Se and Rh show a high affinity for ethylene/acrylic acid copolymer (EAA), whereas Os, Re, and Pt show a lower affinity for the same EAA.

One advantage to using the ECA polymers, in contradistinction to customarily used ion exchange resins, is that these ECA polymers can be used over a wide spectrum of pH values, from highly acid to highly basic (typically a pH of 3-13). Many commercially available ion exchange resins are designed for use only at an acid pH or at an alkaline pH. Furthermore, the present ECA polymers are quite inexpensive in comparison to commercially available ion exchange beads, are more easily regenerated at various pH's, and, if desired, can be inexpensively sacrificed in order to salvage the metal values attached to them. For example, if a highly valuable noble metal (e.g. gold), platinum metal, rare earth metal, actinide metal, transition metal, and the like is attached to the ECA, the inexpensive ECA can be sacrificed in attaining optimum salvaging of the metal. Furthermore, even if the metal has little or no intrinsic salvage value, the ECA which holds the metal can be employed as an ingredient in other plastics or composites where the metal is not a detriment or can be molded into useful articles.

The ECA polymers are generally resistant enough to dissolution by most liquids, though they do swell in many liquids. However, resistance to swelling and dissolution can be imparted to the ECA polymers by cross-linking the ECA in accordance with known procedures. Cross-linking of such polymers via irradiation and use of peroxides is known. Also, cross-linking elevates the softening temperature.

Regeneration of the ECA polymer to remove the affixed metal values and to re-use the polymer for further metal removals from solutions is done, e.g., by treatment with a strong mineral acid (e.g. HCl, $H_2SO_4$, $HNO_3$, $H_3PO_4$) or by treatment with an alkali salt of EDTA (ethylenediamine tetraacetic acid) in solution with a strong base (e.g. NaOH, $NH_4OH$).

The following examples illustrate embodiments of the present invention, but the invention is not limited to the particular embodiments shown.

### Example 1

#### Preparation of Microporous Fibers From Oriented Granules

Granules chopped from an oriented strand of an ethylene/acrylic acid copolymer (20 percent AA, 300 M.I.) were mixed with 0.5N NaOH at a molar ratio of 0.4 NaOH/1.0 AA. The mixture was heated at 50°C overnight to swell the granules, which about doubled the volume of each granule and made them soft. Excess liquid was drained off and replaced with deionized water, and the mixture was placed in a Waring blender to cause fibrillation into fine fibers. The fine fibers were acidified (to about pH 4-6) to precipitate any very small fines or colloidal polymer; this step is optional, but it increases the ease of filtration and results in wash waters substantially free of contamination. The fibrous mass is washed and vacuum-filtered on a coarse filter; an optional washing with acetone or methanol provides rapid drying. After drying at a temperature not in excess of 60°C, the fibers were screened to remove dust and to remove any large particles. The 20-40 mesh microporous fibers exhibited over $4m^2/g$ surface area (nitrogen absorption/BET method).

A sample of 1,1-dichloroethane, containing about 3 percent by weight of anh. HCl and about 29 ppm of iron in the form of soluble and colloidal $FeCl_3$ was passed through a bed of the microporous fibers. The brown solution was rendered colorless by the treatment and the iron content was reduced to less than 1ppm. The fibers became dicolored by the iron collected therein.

### Example 2

#### Iron-Removal from 1,1-dichloroethane

Another contaminated portion of the 1,1-dichloroethane of Example 1 above was contacted with some of the microporous fibers of Example 1 in a bottle. The fibers took on the brown color (as ethylene/ferric acrylate copolymer) and were filtered out of the liquid, which became water-white and had less than 1ppm iron remaining in it.

### Example 3

#### Iron-Removal and Regeneration

A sample of the EAA microporous fibers (20 to 40 mesh) was placed in a 25 ml burette with glass wool beneath and above it to prevent fiber displacement. About 20 inches (50.8 cm) of bed depth was obtained. A 100 ml portion of the 1,1-dichloroethane (of Example 1 above) was passed through the bed at a flow rate of 5 ml/min. (about 18 to 20 min. residence time in the bed). About 29 ppm iron was in the solution prior to treatment and there was less than 1 ppm iron remaining in the liquid after passing throught the bed; the liquid became water-white. About 1 pint (568 ml) of the sample was then passed through the fiber bed with the same results, and no breakthrough was observed. The polymer near the top of the bed became yellowish, indicating the formation of ethylene/ferric acrylate copolymer.

The bed of fibers was regenerated for additional use by passing one bed volume of methanol through the bed to replace the 1,1-dichloroethane (this step is optional). Then one bed volume of deionized water was passed through to replace the methanol. Two bed volumes of concentrated HCl solution was passed through to remove the iron as ferric chloride, thereby regenerating the polymer to the original EAA form. The acid was flushed from the bed with deionized water and the water was flushed out with methanol. The bed was ready for re-use.

### Example 4

Iron-Removal from Water and Regeneration

A 25 ml sample of an aqueous stream containing 1000 ppm $Fe^{+++}$ was passed through a bed of EAA microporous fiber (20 to 40 mesh, 20 percent AA/80 percent ethylene, about 5 $m^2/g$) with a contact time of 20 minutes. The starting solution was dark brown and the treated solution was colorless. The treated stream was passed through a second bed of microporous fiber with a contact time of 5 to 6 minutes and then tested for iron content. Less than 1 ppm was detected by emission spec.

The top layer of the first bed was discolored to a dark brown color during use. The first bed was regenerated to its active, carboxylic acid form, by passing three bed volumes of concentrated HCl through the bed, followed by a thorough wash with deionized water. The regenerated bed was white, similar to its appearance before use. The concentrated HCl used in regeneration was yellow, due to the presence of iron.

### Example 5

Removal of Cu, Zn, and Ni

A 25 ml portion of an aqueous stream containing 1.6 ppm $Cu^{++}$, 10.0 ppm $Zn^{++}$, 6.2 ppm $Ni^{++}$, and 2.1 ppm $Ni^{+++}$ was polished to less than 1 ppm metal content (almost undetectable levels of metals) by contact for 30 minutes with a bed of 50 to 100 mesh microporous fiber (about 15 $m^2/g$ surface area, 20 percent AA/80 percent ethylene) copolymer. The bed contained a large excess capacity compared to the solution used.

### Example 6

Removal of Cr

A 25 ml sample of an aqueous stream containing 14.0 ppm $Cr^{+++}$ was passed through a bed of EAA microporous fibers (20 percent AA/80 percent ethylene, 20 to 40 mesh, about 5 $m^2/g$) with a contact time of 6 minutes. The treated solution contained 0.24 ppm $Cr^{+++}$ by analysis (98.3 percent removal).

### Example 7

Removal of Metals from Water

Aqueous streams of precious metals were used in metal recovery by contact with EAA microporous fiber as follows: 3 ml samples of the respective solutions were placed in bottles along with about 0.1 g of EAA fiber (derived from 20 percent AA/80 percent ethylene of 20 to 40 mesh, 10 $m^2/g$ surface area). Overnight contact time was allowed (the data are reported in ppm's):

| Metal | Before Treatment | After Treatment | % Removed | In Polymer After Use |
|---|---|---|---|---|
| Au | 1100 | F1 | 100 | 33,000 |
| Ag | 800 | 56 | 93 | 28,000 |
| Ir | 224 | 110 | 49 | 3,200 |
| Ru | 262 | 186 | 29 | 760 |
| Pd | 476 | 400 | 16 | 2,300 |

Gold and silver were readily removed from solution while some utility for recovery of iridium, ruthenium, and paladium was observed. For precious metals recovery, the expended fibers could be ashed and the oxides reduced with hydrogen or dissolved in nitric acid or the like.

## Example 8

### Aluminum Removal from Acid Solution

An aqueous stream containing 3 percent $AlCl_3$ and 1 percent HCl was passed through a bed of EAA fiber (20 to 40 mesh, 20 percent AA/80 percent ethylene, about 5 $m^2/g$) with a contact time of 30 minutes. Excess capacity was available in the bed. The aluminum content of the treated solution was reduced to 160 to 300 ppm Al by a single exposure to EAA. Metal removal to below 1000 ppm was desired.

## Example 9

### Simultaneous Removal of Several Metals

An aqueous solution containing $Cr^{+++}$, $Zn^{++}$, $Ni^{++}$, and $Cu^{++}$ ions was prepared from the respective metal chlorides and analyzed for metal content by emission spec. A 25 ml portion of the heavy metal ion solution was treated with 12 ml of an EAA dispersion containing 12 weight percent solids (300 to 500A° diameter particles in an aqueous ammonical dispersion derived from a copolymer containing 20 weight percent acrylic acid/80 weight percent ethylene and having a 300 melt index). A second 25 ml portion of the metal ion solution was diluted with 12 ml of deionized water and designated as a "control sample". The treated sample pptd. a blue floc which was readily removed by filtration. A small portion of the treated solution was removed for analysis after 3 minutes reaction time, then the treatment was repeated a second and third time. Analysis concentrations were adjusted for dilution effects and results are tabulated below in ppm's:

| Metal Ion | Control (Starting Solution) | After 1st Treatment | After 2nd Treatment | After 3rd Treatment | % Removal of ion |
|---|---|---|---|---|---|
| $Cu^{++}$ | 720 | 140 | 24 | 1.6 | 99.8 |
| $Zn^{++}$ | 1400 | 410 | 110 | 10.0 | 99.3 |
| $Ni^{++}$ | 670 | 260 | 58 | 6.2 | 99.1 |
| $CR^{+++}$ | 590 | 140 | 21 | 2.1 | 99.6 |
| Total Metal Content | 3380 | 950 | 213 | 19.9 | – – |
| % Metal Ion Removed, Cumulative | 0 | 71.9* | 93.7 | 99.4 | 99.4 |

*Note: 72% observed removal vs. 87% theoretical maximum expected (based on EAA added) indicates 82% effective use of carboxylic acid groups with 3 minutes exposure time.

## Example 10

### Lead Removal by Ion Exchange Bead/EAA Fiber Composite

An EAA copolymer containing 80 weight percent ethylene, 20 weight percent acrylic acid was melt spun at 125°C into a 10 micron filament. The oriented filament was chopped to 6mm fiber length and swollen for 60 minutes at 55°C in 0.5N NaOH solution. The excess caustic was removed by two water rinses and the fibrous mass was diluted into an aqueous slurry containing 2.0 weight percent of the microporous fiber. The slurry was cast onto a 50 mesh stainless steel wire screen and the water drawn off under vacuum to yield a non-woven felt or mat of 0.3 cm thickness and 0.24 g/cm$^3$ bulk density (70 percent void volume). The mat was dried and cut into discs of 4.0 cm diameter. The cut edges of a fibrous disc were sealed with epoxy cement and the disc was then sealed at its edges to a short glass column with epoxy to prevent edge leakage. A 40 mesh polypropylene scrim was attached beneath the mat as an additional physical support to prevent sagging. A 2.0 cm deep bed (L/D ratio of 0.5) of macroporous ion exchange beads (90 percent acrylic acid-10 percent divinylbenzene cross-linked copolymer; DOWEX MWC-1 resin) was deposited upon the 4.0 cm fibrous disc. A 40 mesh polypropylene scrim was attached above the ion exchange beads to keep the bed in place. The two component (composite) device thus formed contained 87 percent beads and 13 percent fiber by volume, 96 percent beads and 4 percent fiber by weight, and on a capacity or molar equivalent basis contained 99 percent bead chemistry and only 1 percent fiber chemistry. The fiber/bead composite is referred to herein as FBC. A separate 2.0 cm deep bed (L/D ratio of 0.5) of the same ion exchange beads was prepared for comparative use.

A feed stream containing 51.0 ppm lead (divalent lead, Pb, + + ion from lead nitrate) was pumped through each metal removal system at a flow rate of 20 bed volumes per hour. Feed was introduced at the top and allowed to percolate through the ion exchange materials and exit at the bottom of the column, which is a normal ion exchange treatment. The lead concentration in the stream treated with only ion exchange beads was 1.5 ppm lead (about 97.0 percent lead removal at about 180 seconds contact time). The lead concentration in the stream treated with the composite device was less than 0.01 ppm lead (99.98 percent lead removal) after 160 second contact time followed by 20 seconds of contact with microporous EAA fiber. Generally less than 0.05 ppm lead is allowed by E.P.A. pollution control guidelines.

Example 11

Fiber Kinetics for Copper Removal

Microporous fibers derived from 80 percent ethylene 20 percent acrylic acid copolymer were cast into mats, as described in Example 10. A 40 mm diameter (L/D of 0.08) disc (cut from the mat) was sealed at the edges with epoxy and attached to the walls of a short column with epoxy cement (to prevent edge leakage of the untreated feed stream). A feed stream containing 3.9 ppm of cupric ion (from a cupric sulfate solution) was pumped through the fibrous mat at various flow rates; results are shown below:

| Contact Time (sec.) | Flow Rate (bed vol./ hour) | Cu++ Conc., after Treatment (ppm) | Cu++ removal (percent) |
|---|---|---|---|
| 6.4 | 560 | <.05 | >99 |
| 4.1 | 880 | <.05 | >99 |
| 1.9 | 1840 | <.05 | >99 |
| 1.2 | 2800 | <.05 | >99 |
| 1.1 | 3300 | <.05 | >99 |
| 0.9 | 4000 | <.05 | >99 |

Even at the exceedingly fast flow rate of 4000 bed vol./hr. the 3 mm thick mat of microporous ion exchange fiber showed exceptional metal removal kinetics to polish the toxic copper ions to easily meet EPA pollution control guidelines.

Example 12

Calcium Removal Using Beads and Fiber/Bead Composite (FBC)

The microporous fiber/ion exchange bead composite (FBC) device of Example 10 (0.3 cm. thick fiber mat, 2.0 cm bead bed depth, 40 mm bed diameter) was used for calcium ion removal and compared to a 2.0 cm bed depth of the ion exchange beads* (beads only) used at similar flow rates. A feed stream containing 2.9 ppm calcium ions was treated and the results are shown below:

| Treatment | Bed vol./ /hr. (flow rate) | $Ca^{++}$ Conc., after treatment (ppm) | $Ca^{++}$ removed (percent) |
|---|---|---|---|
| FBC device | 15 | 0.37 | 87 |
| Beads only* | 15 | 0.55 | 81 |
| FBC device | 35 | 0.29 | 90 |
| Beads only | 35 | 1.10 | 62 |
| FBC device | 50 | 0.26 | 91 |
| Beads only | 50 | 1.45 | 50 |

*Macroporous beads are 20-50 mesh DOWEX MWC-1 resin, 90 percent polyacrylic acid cross-linked with 10 percent divinylbenzene.

The microporous fiber/ion exchange bead composite device gave better metal removal than ion exchange beads alone and the metal removal improvement became more obvious at higher flow rates.

Example 13

Oriented Microporous Fibers for Iron Removal

Oriented microporous EAA fibers were derived as follows: A 100 g filament, of about 1/16 inch (0.16 cm) diameter, and composed of 80 weight percent ethylene-20 weight percent acrylic acid copolymer was cold-drawn by hand by a factor of 1.5 to 2.0 and chopped into 1/16 inch (0.16 cm) segments and placed into a swelling bath containing 0.5N NaOH solution at 55 to 60°C. The filament segments were swelled for four hours and turned white and rubbery during swelling. The filaments were drained, washed with de-ionized water, and placed in Waring blender with the blade placed in a backward position (for beating). The soft, rubbery filament was bent into a pulp in a few seconds by the blunt blades of the Waring blender. Fibers of about 1/8 inch (0.32 cm) length and 10 to 30 micron were common with fibrils (branching) of 2 to 5 microns being very abundant. Upon close examination the fibers were found to be ribbon-like with fibrils composed of small ribbons pendent from the parent ribbon. A slurry of 2 percent by weight was prepared by dilution with de-ionized water.

A four-inch (10 cm) layer of the oriented fiber was deposited in the bottom of a 100 ml burette and a 16 inch (40.6 cm) layer of ion exchange beads (Macroporous beads are 20 to 50 mesh MWC-1 resin, 90 percent polyacrylic acid cross-linked with 10 percent divinylbenzene) placed in a second layer above to form a layered bed of 20 inches overall bed depth (denote as bed A). A 20 inch (50.8 cm) column of the same ion exchange beads was formed in a second 100 ml burrette (denote as bed B), and a third bed containing a 20 inch (50.8 cm) depth of oriented microporous EAA fiber (denote as C). Iron removal data are shown below.

| Material Used | Bed Used | | |
|---|---|---|---|
| | A | B | C |
| | Beads/Fiber | Beads | Fiber |
| Relative bed Capacity (theoretical) | 81 | 100 | 5 |
| Beads by Volume,% | 80 | 100 | 0 |
| Fiber by Volume,% | 20 | 0 | 100 |
| Flow rate; bed vol./hr. | 8.8 | 9.5 | 18 |
| Feed Solution, $Fe^{+++}$,ppm | 67 | 67 | 67 |
| After Treatment,ppm | <.05 | 1.8 | <.05 |
| Iron removal, % | >99.9 | 97.3 | >99.9 |

The use of microporous fiber (C) gives better metal removal than polyacrylic acid ion exchange beads (B). Composite beds containing fiber and beads (A) increases the overall theoretical capacity of a fixed volume bed (by a factor of 16 for bed B compared to bed C) with over 99.9 percent iron removal observed.

Example 14

Microporous Granular EAA Beads for Copper Removal

An ethylene-acrylic acid copolymer (m.p. about 98°C) containing 20 percent AA by weight and exhibiting a 300 melt index was extruded and die-face-cut into granules (i.e., granules extruded under the surface of water and cut directly from the die face). Granules cut in this manner anneal and do not exhibit orientation in their morphology. These unoriented granules were swollen five hours at 55 to 50°C in excess 0.5 N NaOH solution drained, water-washed, and beat into a small-particle slurry on a Waring blender for 30 to 60 seconds. No substantial porosity was observed. The polymer/water slurry was then filtered and again thoroughly reswelled for 1 hour in 0.5 N NaOH at 45°C to insure complete swelling and conversion to the wettable, microporous sodium salt form. The slurry was drained, filtered, and thoroughly water-washed on the filter to remove unreacted caustic and also acetone washed while wet; this dries the polymer. Wettable microporous particles of 20 to 40 mesh were obtained.

A ten-gram portion of the microporous particles above was added to a 100 ml of a 1 percent by weight of cupric sulfate solution and left overnight. The particles turned very dark blue. The particles were isolated by filtration, thoroughly water-washed, and air dried. Copper analysis was conducted (emission spec. on ICP Jarrell Ash Mod. Atom - Comp Series 1100) and 5.4 weight percent copper was observed.

The particles were highly microporous as determined by electron microscopy. The microporous structure could best be described as "spongelike." The dark blue particles melted above 150°C and were readily compression molded (hot press) into blue sheets and films at 150°C and above.

A one-gram sample of the blue particles (5.4 weight percent copper content) was treated five minutes with 10 ml of an aqueous solution containing 17 percent sodium salt of EDTA and 3 percent ammonia, then rinsed with a second 10 ml portion of the solution. The particles became very white (as the parent beads) and metal analysis showed less than 70 ppm copper content remaining. The particles were again placed in copper solution and immediately turned blue. The Na-EDTA ammonia treatment was judged to be very useful for regeneration of the microporous particles.

A one-gram sample of the blue particles (5.4 weight percent copper content) was treated overnight with concentrated hydrochloric acid then washed with more concentrated hydrochloric acid, then water washed and air dried. The particles were pale yellow in color, and very hydrophobic. A wash with dilute caustic produced wettable particles. The caustic was washed out thoroughly and the particles found suitable for reuse in copper removal from aqueous streams, and also suitable for molding and powder coating applications (M.P. 98 to 100°C).

14

Micropores from 2 microns down to less than 0.1 microns were observed by electron microscopy at 5,000 to 20,000 manifications using a JEDC JSM-T300 Scanning Electron Microscope.

The procedures outlined were repeated several times with copper uptake ranging from 5 percent to 8 weight percent and pore sizes ranging from 2 microns to 0.05 microns with an average pore size of 0.1 to 0.3 micron pore diameter (submicron pores) observed in the particles in the acid form, sodium salt form, and copper salt form.

Example 15

Microporous EAA Wafers for Selenium Removal

An extruded monofilament of a copolymer (composed of about 20 weight percent acrylic acid and 80 weight percent ethylene and exhibiting a melt flow value of 300 and having a weight average molecular weight of 25,000 and a number average molecular weight of 6140 as determined by gel permeation chromatography in tetrahydrofuran) was cold-drawn by hand to achieve 50 to 55 percent orientation. A 100 g filament sample of about 1/16 inch (0.16 cm) diameter was placed in a beaker containing 0.5N NaOH solution and allowed to swell at 50°C for five hours, then thoroughly washed in de-ionized water, air dried, and sliced into wafers about 1/32 inch (0.08 cm) thick by 1/16 inch (0.16 cm) diameter. When viewed under a microscope, the wafer end surfaces (cut surfaces) exhibited many tiny fibers oriented directly toward the cut surface. The fibers were about 10 micron thick and contained porous substructures of ribbon-like appearance. Capillary structures of 10 to 30 micron diameter were observed between fibers and fiber bundles. The capillary structures extended deep into the wafer interior much resembling the "end grain" in wood. The fiber and capillary walls exhibited a rough spongy appearance with pore sizes of 0.05 microns and less (as viewed by electron microscopy).

The wafers described above were placed in a 16 inch (40.6 cm) deep bed in a burette. A feed solution containing 9.6 ppm of $Se^{++}$ (as selenium sulfate) was pumped through the column at 14 bed vol./hr. flow rate. The treated stream contained less than 0.05 ppm selenium (over 99.4 percent selenium removal) as determined by emission spectroscopy.

Example 16

Oriented Microporous Fiber for Toxic Metal Ion Removal

Oriented microporous fibers (same as example 15) were placed in a 20 inch (50.8 cm) deep bed in a 100 ml burette and toxic metal ion solutions containing arsenic ions, mercuric ions, cadmium ions, lead ions or silver ions were treated. Results are shown below:

| Metal Ion Removed | Untreated (ppm) | Solution pH | Residence time, min. | Treated, or Final Conc. (ppm) | % Metal ion Removed |
|---|---|---|---|---|---|
| $As^{+++}$ | 1.4 | 5 | 5.5 | <0.09 | >93 |
| $Hg^{++}$ | 12 | 6 | 6.5 | <0.01 | >99.9 |
| $Cd^{++}$ | 7 | 5 | 5.5 | <0.01 | >99.9 |
| $Pb^{++}$ | 5.2 | 6 | 5.5 | <0.01 | >99.8 |
| $Ag^{+}$ | 250 | 6 | 5.0 | 0.05 | >99.9 |

The toxic metal cations were readily removed from solution by oriented microporous fibers derived from EAA copolymer. Over 99 percent metal removal was typical and treated solutions generally met pollution control guidelines for outfall into public waters.

15

Example 17

Uranium Removal and Recovery As Ionomer

A 0.1 g sample of oriented EAA microporous fiber of the present invention was placed in a bottle with a few ml of a solution containing 1000 ppm of uranium (as uranium acetate) and left in contact overnight. The solution was decanted and filtered and found to contain less than 1 ppm uranium (over 99.9 percent uranium removal). The fiber turned bright yellow during reaction and was washed thoroughly with deionized water and dried. The dry fiber contained 25.0 weight percent uranium, as measured by emission spectroscopy.

Example 18

Non-porous EAA vs Porous EAA for Copper Ion Removal (for comparison purposes)

Unoriented, substantially non-porous EAA particulate EAA of 20 to 40 mesh was prepared from EAA copolymer granules (20 percent AA-80E, 300 MI) using practices taught in U.S.Patent No. 3,801,551 and placed in a 100 ml burette packed to obtain a 20 inch (50.8 cm) column. A flow rate of 14.6 bed vol./hr. was used for a feed containing 900 ppm of copper (as cupric sulfate). The treated solution contained 900 ppm copper (no apparent copper removal). The column bed turned pale green throughout during use, without any visible color layers being formed.

Oriented, porous EAA fibers were prepared (as in Example 13) from the same polymer as used in the instance above (20 percent AA-80 percent Ethylene, 300 melt flow value). The EAA beads were extruded into a strand and cold-drawn to 30 to 35 percent orientation prior to swelling. Both the oriented and the unoriented samples were swollen 5 hours at 50°C in 0.5 N NaOH solution. A 20 to 40 mesh size of the oriented, microporous fiber (resembled small ribbons with slot-like porosity) was packed into a 100 ml burette and the 900 ppm copier feed was treated at a flow rate of 14.6 bed vol./hr. The treated solution contained <1 ppm copper (>99.9 percent copper removal). A dark blue colored layer appeared at the top of the white column as a result of the copper removal. The dark blue layer became deeper as flow was allowed to continue; the sample for analysis was taken after about five bed volumes of flow (treated solution) were pumped through the bed. Dilution effects are avoided and a representative sample is insured by this procedure.

A solution containing 17.6 percent Na-EDTA and 3.5 percent ammonia was pumped through the bed of microporous EAA fiber at 14.6 bed vol./hr. flow rate. Three bed volumes were used to elute a dark blue solution. Three bed volumes of deionized water were then pumped through the bed as a purge. The bed was regenerated to the reusable ammonium form and was identical to its original (unused) white color and appearance.

A second use cycle gave >99.9 percent copper removal and the bed was regenerated a second cycle with Na-EDTA/NH$_3$ without incident.

This example clearly indicates the importance of microporosity in ECA fibrous materials, especially in the phenomenon of metal cation removal.

16

Example 19

Simultaneous Removal of Metals

| Metal in Solution | Metal in Untreated Solution (ppb) | Metal(ppb) in Solution after Treatment | |
|---|---|---|---|
| | | Microporous Wafer | Microporous, Oriented Fiber |
| Zn | 159 | 57 | 54 |
| V | 45 | 22 | 8 |
| Ni | 36 | 15 | ~1 |
| Sr | 46 | 2 | 6 |
| Fe | 78 | 17 | 8 |
| Mn | 115 | 18 | ~1 |
| Co | 43 | 9 | 4 |
| Mo | 8 | 6 | ~1 |
| Sn | 43 | − | ~1 |
| Cr | 66 | 21 | ~1 |
| Ti | 199 | 97 | ~1 |
| Mg | 41 | <1 | <1 |

A solution containing a spectrum of above metals was pumped at a flow rate of 13.5 bed vol./hr. through a 16 inch (40.6 cm) column each of microporous oriented fibers or microporous oriented wafers substantially as in accordance with Examples 15 and 16. Metal analysis at the ppb level was measured using "counts" on an emission spec. on an ICP Jarrell Ash Model. Atom-Comp series. Treatment with fiber or wafers reduced all metal concentrations simultaneously.

Example 20

Alkali Metal Ion Interchange

Oriented, microporous fibers, the same as Example 16, were placed in a 100 $cm^3$ burette. The fiber bed was in a sodium salt form. A solution containing 600 ppm of potassium ions (from potassium nitrate) was pumped through the bed at a flow rate of 12 bed vol./hr. The treated solution contained only 6 ppm of potassium ion (99.3 percent potassium removal) and about 350 ppm of sodium (discharged during interchange with the potassium).

The bed was purged with deionized water and a feed stream containing 600 ppm of sodium ion was pumped through the bed (now in a potassium salt form) at a flow rate of 12 bed vol./hr. The treated solution contained 2 ppm sodium ion (99.7 percent sodium removal) and about 1000 ppm of potassium (discharged interchange with sodium).

Example 21

Alkaline Earth Metal Exchange with Other Metals

Oriented, microporous fibers, the same as Example 15, were placed in a 100 $cm^3$ burette. The fiber bed was in a sodium salt form, but was converted to a calcium salt form by pumping through an excess of a calcium solution (from calcium nitrate). A solution containing 200 ppm calcium ions and also a second metal of either copper (cupric) ions, chromium III ions, or iron (ferric) ions, was pumped through the bed at a flow

17

rate of 12 bed vol./hr. with the following results:

| Feed Solution | Treated Solution | |
|---|---|---|
| | (ppm) | (% Removed) |
| 200 ppm Cu$^{++}$ | <1 | >99.5 |
| 100 ppm Cr$^{+++}$ | <1 | >99.9 |
| 10 ppm Fe$^{+++}$ | <0.2 | >98.0 |

A solution containing 200 ppm magnesium ion and 200 ppm copper (cupric) ion was treated as above and contained <1 ppm copper after treatment (99.5 percent copper removal) and 200 ppm magnesium (no magnesium removal).

A bed of the fiber, in the magnesium salt form (derived by saturation of the sodium salt form with excess magnesium nitrate), was treated with a solution containing 200 ppm of cupric ion (from cupric nitrate) and also 200 ppm of calcium (from calcium nitrate) at a flow of 12 bed vol./hr. The treated solution contained <1 ppm copper and <1 ppm calcium, but contained approximately 200 ppm of magnesium, which was discharged during the interchange with cupric and calcium ions. The interchange gave >99.5 percent copper and calcium removal.

Example 22

Cleaning Up Spills Containing Metals

A quantity of an aqueous solution containing polyvalent metal cations, spilled out on the ground, was treated by spreading ECA microporous particles, especially in the form of an aqueous dispersion, into the spill. Soon afterward, the spill was taken up and the ECA particles, now containing most of the metal cation values were separated from the aqueous medium, such as by filtration. A mixture of microporous ECA fibers mixed into an aqueous dispersion of microporous ECA small particles was especially effective in this type of operation.

In comparision, ordinary ion exchange resin beads, such as a DVB (divinylbenzene) cross-linked polymer of styrene having pendent iminodiacetic acid groups (also known as a weak acid chelating resin) or a DVB cross-linked polyacrylic acid resin (a macroporous bead) exhibits very little effectiveness in this type of operation.

Example 23

Exchanging Na$^+$ and K$^+$ ions

Microporous ECA particles, having -COOH groups neutralized by NaOH to -COONa groups, when contacted with an "overwhelming" amount of KOH, convert most of the -COONa groups to -COOK groups. Conversely, particles having -COOK groups are converted to COONa groups by being contacted with an overwhelming amount of NaOH.

The examples which follow are for illustration, but the invention is not limited to the particular illustrations shown.

Example 24

(Fiber Preparation)

An ethylene-acrylic acid (20 percent AA/80 percent E, 300 MFR) in the form of granules was combined with 0.5N NaOH at a molar ratio of 0.4 NaOH/1.0 AA. The mixture was heated at 50°C overnight to swell the granules. The granules roughly doubled in volume and became soft and white. The excess liquids were drained off and replaced with deionized water. The mixture was placed in a Waring blender and fibrillated (blended) for 6 minutes to obtain a 20 to 40, mesh fiber size. The mass of fibers was acidified with 0.1 N HCl to a pH of 4, then filtered and water washed on a coarse frit filter. The fibers were vacuum-dried at room temp. (drying temperature below 60°C to prevent sintering of fibers). These fibers were screened to collect 20 to 40 mesh fraction and larger fibers were recycled to the NaOH swelling steps (all EAA was obtained as fibers by this method).

Example 25

(Brine Treatment)

A sample of filtered saturated NaCl alkaline brine (pH 11.3) was obtained. This brine had undergone conventional treatment to prepare it for use as diaphragm chlor-alkali cell feed. This brine was analyzed for hardness and found to contain approximately 1.51 ppm hardness as $Ca^{++}$. A 425 ml sample of this brine was added to a plastic beaker which already contained 250 ml dry volume of EAA fibers. The EAA fibers were made from a thermoplastic EAA copolymer which was approximately 20 percent acrylic acid. It was in the form of 20 to 40 mesh size fibers and had a surface area of approximately 5 $m^2$/g. A magnetic stirring bar (Teflon® coated) was put in the beaker containing the brine and EAA fibers. The beaker was covered and left stirring on a magnetic stirrer for 21 hours. Most of the EAA fibers floated near the surface of the brine, but the agitation of the magnetic stirring bar drew down enough of the fibers throughout the brine to make the mixture cloudy and almost opaque.

After 21 hours of mixing, the brine/fiber mixture was poured into a 500 ml separatory funnel in order to get a bulk separation of the solid and liquid phases (most of the solid fibers floated to the surface of the brine). The liquid phase (brine) was drawn out through the bottom of the separatory funnel and filtered through Whatman 41 ashless filter paper to remove the remaining fibers. This EAA treated brine was analyzed for hardness and found to contain approximately 0.059 ppm hardness as $Ca^{++}$.

Example 26

Fiber Regeneration

Expended fibers were placed in a bed (if not already in a bed). D.I. water was passed thru the bed. About two bed volumes of concentrated HCl regenerate the bed to the EAA form by ion exchange. The bed was washed free of HCl with D.I. water and was ready for reuse in brine treatment.

Example 27

Brine Purification by Column Treatment

In order to compare EAA fibers with a commercially available ion exchange resin, and to show tandem use of the two, the following experiment was made:

Using a Masterflex variable speed pump, a concentrated brine feed (24 percent by weight of NaCl) containing 1250 ppb hardness (as $Ca^{++}$) was passed through a 20 inch column (having a length/diameter ratio of about 40) of AMBERLITE IRC-718 Ion Exchange Beads (from Rohm & Haas) at a flow rate of 20 ml/min., which is 12 BVH (bed volumes per hour), to give a contact time of 5 minutes. A plurality of these runs was made to gather data over a range and compute the average.

A portion of EAA fibers, such as Example 24 above, was placed in a column and used in similar manner as described above. Also, as in similar manner as described above, a portion of the brine was passed first through 20 inch (50.8 cm) of the commercial Ion Exchange Beads and then through a polishing step of 20" (50.8 cm) of the EAA fibers. Chemical analysis was made for hardness after treatment. The data are shown below:

| Treating Agent* | $Ca^{++}$ In Brine After Treatment(ppb)*** | |
| --- | --- | --- |
| | Range | Average |
| 20" (50.8 cm) of A* | 20-27 | 22 |
| 20" (50.8 cm) of B** | 4-9 | 6 |
| 20" (50.8 cm) of A/20" (50.8 cm) of B | 5-7 | 6 |

*A is commercially available AMBERLITE IRC-718 weak acid exchange beads having carboxylic functionality (iminodiacetic acid) of the empirical formula

, crosslinked with DVB (divinylbenzene) where n represents a plurality of recurring groups.

B** is an EAA copolymer fiber as in Example 1 above.
*** the analyses are approximations at the lower values since the analytical technique is not as sensitive at about 10 ppb and less.

This example was used to demonstrate that one may use an ordinary ton exchange bead to do a "rough" clean-up of the brine, then use the present EAA fibers in a "polishing" step. The EAA in the polishing step can be used in many change-outs of the ion exchange beads and will catch the "break-through" hardness values that escape through fully loaded ion exchange beads. A concentrated NaCl brine, having hardness values reduced to 10 ppb (measured as $Ca^{++}$) is ideally suited for use as a brine feed for an electrolytic chlor-alkali cell where $Cl_2$ and NaOH are produced and where fouling of the cell membrane or diaphragm by hardness values is detrimental.

Example 28

An aqueous solution containing 60 percent by weight of 1-chloro-2-hydroxypropyl-trimethylammonium chloride, contaminated with 40 ppm iron in the form of iron silicate and soluble iron chloride which gives a dark brown color to the solution, is passed through a bed of fibers made substantially in accordance with the procedure disclosed in U.S. Patent No. 3,801,551. The fibers are prepared by chopping hot-drawn strands of EAA (20 percent AA, 300 M.F.R.) into pellets; digesting (and swelling) the pellets overnight at 50°C with a sufficient amount of 0.5N NaOH to give a molar ratio of 0.4 NaOH/1.0AA (as -COONa groups); draining off excess liquid; slurrying the swollen pellets in de-ionized water; fibrillating the pellets in a Waring blender for a few minutes, thereby obtaining small fibers; filtering; and water-washing the fibers. These fibers are too short to effectively form a good mat or felt by vacuum-deposition from an aqueous slurry onto a foraminous substrate.

The fibers (a 3.6 g portion), exhibiting a surface area of greater than $4m^2/g$ and a 20 to 40 mesh fiber size were placed in a 100 ml burette (with glass wool placed above and below to prevent fiber displacement or floating) to form a fiber bed depth of 2 inches (5 cm). About 20 ml of deionized water was run downwardly through the column to wet down and "pack" the bed. The column was then filled to the 100 ml mark, providing a head of 16 to 18 inches (40.6 to 45.7 cm) of fluid and a residence time in the column of about 6.1 minutes at the flow rate of 1.32 ml./min. About a liter of so-treated amine was collected as a water-white solution having an iron content of less than 1.0 ppm and no "breakthrough" was encountered. The polymer fibers became discolored to a dark reddish-brown, especially near the top of the bed of fibers.

Example 29

The contaminated bed of polymer in Example 28 above was regenerated by flushing out residual amine, using deionized water. About 2 bed volumes of conc. HCl were passed through the bed to take out the contaminants, regenerate the -COOH groups, and return the polymer to an almost colorless form. The bed was washed with deionized water to remove the HCl and was used again as in Example 28 to remove contaminants from more of the amine, obtaining essentially the same results as in Example 28.

The bed was again regenerated as above and again used in removing contaminants from the amine. Essentially the same results were obtained and no deterioration of the resin was found after these 3 cycles of use.

Example 30

An aqueous solution containing 60 weight percent 1-chloro-2-hydroxypropyl-trimethylammonium chloride and about 40 ppm of iron (dark brown solution) contamination (colloidal iron silicate, some soluble iron chloride) was treated with an aqueous dispersion which contained 5 weight percent of fine particle size ethylene/ammonium acrylate copolymer. The copolymer contained 20 percent by weight acrylic acid and had a MFR of 1300 g/10 min., the acid groups being neutralized with ammonia during dispersion, the particles so-dispersed being smaller than 1000 angstroms in diameter. The treatment was done by adding the polymer dispersion to the contaminated quaternary compound to a concentration of 1000 ppm of the polymer. The mixture was stirred 5 minutes to mix the dispersion thoroughly and floc the ethylene-ferric acrylate copolymer and entrain the particulate ferric silicate. The floc, containing the iron, was removed by filtration through a 10 to 15 micron filter (medium frit) under vacuum. The filtrate was colorless and contained less than 1 ppm iron, as measured by emission spec.

Example 31

A 0.1 inch (0.25 cm) diameter strand of EAA copolymer (20 percent AA, 300 M.F.R.) was cold-drawn to 15 to 20 percent orientation and then swollen 4 hours in 0.61 N NaOH at 60 to 65°C, giving $\{$COONa$)$ groups. The filament was pressed with a steel roller which caused it to fibrillate into a "tape" of microfilament bundles and then was pulped into an aqueous slurry (0.5 percent solids) using a Waring blender for a few seconds. The so-formed pulp fibers were, typically, ribbon-like strands of 5 micron thickness, 35 micron width, and 3/16 inch to 1/4 inch (0.48 to 0.63 cm) length. The blades of the Waring blender were intentionally installed backward in order to "beat" the polymer into pulp rather than use the sharp edge of the blades which would cut the fibers; cutting the fibers would result in fewer fibrils and more fines.

Some of the pulp fibers were washed and vacuum-drawn as a felt on a 100 mesh stainless steel screen. The felt was air dried and resembled bleached cellulosic paper, the fibrils exhibiting good entanglement and resulted in enhanced felt integrity.

Both the felt and the pulped fibers were found to be effective in removing iron contamination from an aqueous solution containing 60 percent by weight of 1-chloro-2-hydroxypropyl-trimethylammonium chloride contaminated with 40 ppm iron silicate/iron chloride, yielding a water-clear solution containing less than 1 ppm iron.

Example 32

An EAA copolymer such as in Example 31 was melt-spun through orifices which yielded strands of 10, 20, and 30 microns diameter. The strands were found to swell in less than 5 minutes at 55°C in 0.5N NaOH solution, giving (COONa) groups. The swollen material, chopped into fibers of 0.5 to 1.0 inch (1.3 to 2.5 cm) length, and cast onto a stainless steel screen (100 mesh) was found to have few fibrils, thus almost no fibril entanglement, and felts prepared from the melt-spun fibers did not have the strength of those which have more fibrils.

These fibers were used in successfully removing iron contaminants as in Example 31, yielding a colorless filtrate of less than 1 ppm iron.

**Claims**

1. A method for removing metal contaminants from an aqueous and/or organic liquid characterized by
   (a) contacting said aqueous and/or organic liquid with an ethylene polymer having pendent carboxylic acid groups in at least 1 meq./g or pendent carboxylic acid groups in the salt form, said polymer being in microporous fibrous or particulate form and exhibiting a surface area/weight ratio of at least 0.5 $m^2$/g", for a time sufficient to cause the metal values to affix to the polymer, and
   (b) separating the liquid from the polymer.

2. The method of Claim 1 characterized by said polymer being in microporous, particulate form and having a surface area/ weight ratio of at least about 0.5$m^2$/g.

3. The method of Claim 1 wherein :
   (a) said aqueous and/or organic liquid is a fluid amine comprising tertiary amine or quaternary amine salt,
   (b) the pendant carboxylic acid groups are the alkali salt form, and (c) said copolymer is in microporous, particulate form having a surface area/weight ratio of at least 1 $m^2$/g.

4. The method of Claim 1 for removing alkaline earth metal values and other polyvalent metal cations from an alkali metal salt brine, characterized by
   (a) the ethylene polymer having pendent carboxylic acid groups,
   (b) said polymer being in microporous fibrous or particulate form and having a surface area weight ratio of at least 2$m^2$/g.

5. The method of Claim 1 wherein the metal comprises at least one of the metals found in Periodic Table Groups IA, IIA, IIIB, IVB, VB, VIB, VIIB, VIII, IB, IIB, IIIA, IVA, VA, and VIA.

6. The method of Claim 2 wherein the metal comprises at least one of Periodic Table Groups IB, IIB, and VIII.

7. The method of any one of Claims 1 to 4 wherein the ethylene polymer comprises ethylene interpolymerized with an olefinically unsaturated carboxylic acid of the group comprising acrylic acid, methacrylic acid, crotonic acid, itaconic acid, fumaric acid, maleic acid, and butenoic acid.

8. The method of any one of Claims 1 to 6 wherein the ethylene polymer comprises ethylene copolymerized with acrylic acid or methacrylic acid.

9. The method of Claim 1 wherein the polymer, after separation from the liquid, is regenerated by the use of a reactant to remove the metal from the polymer, and using the so-regenerated polymer for removing metal values from additional quantities of liquid.

10. The method of Claim 2 wherein the salt form of the carboxylic acid is an organic salt.

11. The method Claim 2 wherein the salt form of the carboxylic acid is an inorganic salt.

12. The method of Claim 3 wherein the amine is in solution in water.

13. The method of Claim 3 wherein the amine is a tertiary amine.

14. The method of Claim 3 wherein the amine is a quaternary ammonium salt conforming essentially to the empirical formula $R_4NX$,

where R represents alkyl and/or substituted alkyl groups and X represents at least one inorganic salt moiety of the group comprising halide, nitrate, sulfate, hydroxyl, sulfite, nitrite, thiosulfate, and carbonate.

**15.** The method of Claim 3 wherein the contaminants in the amines comprise iron compounds.

**16.** The method of Claim 4 wherein the brine comprises an aqueous solution of NaCl, KCl, or LiCl.

**17.** The method of Claim 4 wherein the brine comprises a cell feed brine in a chlor-alkali electrolytic cell.

**18.** The method of Claim 4 wherein the brine being contacted with the copolymer is one which has already had much of the hardness values already removed in a previous hardness-removal process.

**19.** A method according to Claim 18 wherein said previous hardness-removal process comprises intimately contacting said brine with ion exchange beads which removes most of the hardness values.

**20.** A method according to claim 14 wherein the amine is 1-chloro-2-hydroxypropyltrimethylammonium chloride.

**21.** The ethylene/1-chloro-2-hydroxypropyltrimethylammonium acrylate copolymer obtainable by the process of claim 20.

**Patentansprüche**

**1.** Verfahren zur Entfernung von metallischen Verunreinigungen aus einer wässrigen und/oder organischen Flüssigkeit, gekennzeichnet durch:
(a) Inkontaktbringen dieser wässrigen und/oder organischen Flüssigkeit mit einem Ethylenpolymeren, das anhängende Carbonsäuregruppen in wenigstens 1 meq/g oder anhängende Carbonsäuregruppen in der Salzform besitzt, wobei dieses Polymere in mikroporöser Faser- oder Teilchenform vorliegt und ein Verhältnis Oberfläche/Gewicht von wenigstens 0,5 m$^2$/g aufweist, für eine ausreichende Zeitdauer, um die Fixierung der Metallgehalte an das Polymere zu bewirken, und
(b) Abtrennen der Flüssigkeit von dem Polymeren.

**2.** Verfahren nach Anspruch 1, dadurch gekennzeichnet, daß dieses Polymere in mikropöser Teilchenform vorliegt und ein Verhältnis Oberfläche/Gewicht von wenigstens etwa 0,5 m$^2$/g besitzt.

**3.** Verfahren nach Anspruch 1, worin:
(a) diese wässrige und/oder organische Flüssigkeit ein fluides Amin, das tertiäres Amin oder quaternäres Aminsalz umfaßt, ist,
(b) die anhängenden Carbonsäuregruppen in der Alkalisalzform vorliegen, und
(c) dieses Copolymere in mikroporöser Teilchenform ein Verhältnis Oberfläche/Gewicht von wenigstens 1 m$^2$/g besitzt.

**4.** Verfahren nach Anspruch 1 zur Entfernung von Erdalkalimetallgehalten und anderen polyvalenten Metallkationen aus einer Alkalimetallsalzsole, dadurch gekennzeichnet, daß
(a) das Ethylenpolymere anhängende Carbonsäuregruppen besitzt,
(b) dieses Polymere in mikroporöser Faser- oder Teilchenform vorliegt und ein Verhältnis Oberfläche/Gewicht von wenigstens 2 m$^2$/g besitzt.

**5.** Verfahren nach Anspruch 1, worin das Metall wenigstens eines der in dem Periodensystem, Gruppen IA, IIA, IIIB, IVB, VB, VIB, VIIB, VIII, IB, IIB, IIIA, IVA, VA und VIA gefundenen Metalle umfaßt.

**6.** Verfahren nach Anspruch 2, worin das Metall wenigstens ein Metall aus dem Periodensystem, Gruppen AB, IIB und VIII umfaßt.

**7.** Verfahren nach einem der Ansprüche 1 bis 4, worin das Ethylenpolymere Ethylen zusammenpolymerisiert mit einer olefinisch ungesättigten Carbonsäure der Acrylsäure, Methacrylasäure, Crotonsäure,

23

Itaconsäure, Fumarsäure, Maleinsäure und Butensäure umfassenden Gruppe umfaßt.

**8.** Verfahren nach einem der Ansprüche 1 bis 6, worin das Ethylenpolymere Ethylen copolymerisiert mit Acrylsäure oder Methacrylsäure umfaßt.

**9.** Verfahren nach Anspruch 1, worin das Polymere nach dem Abtrennen von der Flüssigkeit unter Verwendung eines Reaktionsteilnehmers zur Entfernung des Metalls von dem Polymeren regeneriert wird, und das so regenerierte Polymere zur Entfernung von Metallgehalten aus zusätzlichen Flüssigkeitsmengen benutzt wird.

**10.** Verfahren nach Anspruch 2, worin die Salzform der Carbonsäure ein organiches Salz ist.

**11.** Verfahren nach Anspruch 2, worin die Salzform der Carbonsäure ein anorganisches Salz ist.

**12.** Verfahren nach Anspruch 3 worin das Amin in einer Lösung in Wasser ist.

**13.** Verfahren nach Anspruch 3, worin das Amin ein tertiäres Amin ist.

**14.** Verfahren nach Anspruch 3, worin das Amin ein quaternäres Ammoniumsalz, das im wesentlichen der empirischen Formel

$$R_4NX$$

entspricht, ist, worin R Alkyl- oder substituierte Alkylgruppen darstellt und X wenigstens eine anorganische Salzeinheit der Halogenid, Nitrat, Sulfat, Hydroxyl, Sulfit, Nitrit, Thiosulfat und Carbonat umfassenden Gruppe darstellt.

**15.** Verfahren nach Anspruch 3, worin die Verunreinigungen in den Aminen Eisenverbindungen umfassen.

**16.** Verfahren nach Anspruch 4, worin die Sole eine wässrige Lösung von NaCl, KCl oder LiCl umfaßt.

**17.** Verfahren nach Anspruch 4, worin die Sole eine Zelleneinspeisungs-Sole in einer Chloralkali-Elektrolysezelle umfaßt.

**18.** Verfahren nach Anspruch 4, worin die mit dem Copolymeren zu kontaktierende Sole eine Sole ist, bei der ein großer Teil der Härtewerte bereits in einem vorgeschalteten Härteentfernungsverfahren entfernt wurde.

**19.** Verfahren nach Anspruch 18, worin dieses vorgeschaltete Härteentfernungsverfahren das innige Inkontaktbringen dieser Sole mit Ionentauscherbetten umfaßt, welche das meiste der Härtewerte entfernen.

**20.** Verfahren nach Anspruch 14, worin das Amin 1-Chlor-2-hydroxypropyltrimethylammoniumchlorid ist.

**21.** Ethylen/1-Chlor-2-hydroxypropyltrimethylammoniumacrylat-copolymeres, erhältlich nach dem Verfahren nach Anspruch 20.

**Revendications**

**1.** Procédé pour éliminer des impuretés métalliques d'un liquide aqueux et/ou organique, caractérisé en ce que :
   (a) on met ledit liquide aqueux et/ou organique en contact avec un polymère d'éthylène comportant des groupes carboxy latéraux, à raison d'au moins 1 meq/g, ou des groupes carboxy latéraux sous forme de sel, ledit polymère se présentant sous forme de particules ou de fibres microporeuses et possédant une aire spécifique d'au moins 0,5 $m^2/g$, pendant suffisamment longtemps pour permettre aux métaux de se fixer sur le polymère, et
   (b) on sépare le liquide et le polymère.

2. Procédé conforme à la revendication 1, caractérisé en ce que ledit polymère se présente sous forme de particules microporeuses et présente une aire spécifique valant au moins environ 0,5 $m^2$/g.

3. Procédé conforme à la revendication 1, dans lequel :
   (a) ledit liquide aqueux et/ou organique est une amine fluide, comprenant une amine tertiaire ou un sel d'amine quaternaire, et
   (b) les groupes carboxy latéraux sont sous forme de sel alcalin, et
   (c) ledit copolymère se trouve sous forme de particules microporeuses présentant une aire spécifique valant au moins 1 $m^2$/g.

4. Procédé conforme à la revendication 1, pour éliminer des métaux alcalino-terreux et d'autres cations de métaux polyvalents d'une saumure de sel de métal alcalin, caractérisé en ce que :
   (a) le polymère d'éthylène possède des groupes carboxy latéraux, et
   (b) ledit polymère se présente sous forme de fibres ou de particules microporeuses et présente une aire spécifique valant au moins 2 $m^2$/g.

5. Procédé conforme à la revendication 1, dans lequel le métal comprend au moins l'un des métaux trouvés dans les groupes IA, IIA, IIIB, IVB, VB, VIB, VIIB, VIII, IB, IIB, IIIA, IVA, VA et VIA du Tableau Périodique.

6. Procédé conforme à la revendication 2, dans lequel le métal fait partie d'au moins un des groupes IB, IIB, et VIII du Tableau Périodique.

7. Procédé conforme à l'une quelconque des revendications 1 à 4, dans lequel le polymère d'éthylène comprend de l'éthylène polymérisé avec un acide carboxylique à insaturation oléfinique, du groupe constitué par l'acide acrylique, l'acide méthacrylique, l'acide crotonique, l'acide itaconique, l'acide fumarique, l'acide maléique et l'acide buténoïque.

8. Procédé conforme à l'une quelconque des revendications 1 à 6, dans lequel le polymère d'éthylène comprend de l'éthylène copolymérisé avec de l'acide acrylique ou de l'acide méthacrylique.

9. Procédé conforme à la revendication 1, dans lequel le polymère, après avoir été séparé du liquide, est régénéré grâce à l'emploi d'un réactif qui enlève le métal du polymère, et l'on utilise le polymère ainsi régénéré pour enlever des métaux de quantités supplémentaires de liquide.

10. Procédé conforme à la revendication 2, dans lequel la forme sel des groupes carboxy est un sel de base organique.

11. Procédé conforme à la revendication 2, dans lequel la forme sel des groupes carboxy est un sel de base minérale.

12. Procédé conforme à la revendication 3, dans lequel l'amine se trouve en solution dans de l'eau.

13. Procédé conforme à la revendication 3, dans lequel l'amine est une amine tertiaire.

14. Procédé conforme à la revendication 3, dans lequel l'amine est un sel d'ammonium quaternaire, correspondant pratiquement à la formule empirique $R_4NX$, dans laquelle chaque R représente un groupe alkyle, substitué ou non, et X représente au moins un fragment inorganique de sel, faisant partie du groupe comprenant les anions halogénure, nitrate, sulfate, hydroxy, sulfite, nitrite, thiosulfate et carbonate.

15. Procédé conforme à la revendication 3, dans lequel les impuretés présentes dans les amines comprennent des composés du fer.

16. Procédé conforme à la revendication 4, dans lequel la saumure comprend une solution aqueuse de NaCl, KCl ou LiCl.

25

**17.** Procédé conforme à la revendication 4, dans lequel la saumure est une saumure d'alimentation pour une cellule de production de chlore et d'alcali par électrolyse.

**18.** Procédé conforme à la revendication 4, dans lequel la saumure que l'on met en contact avec le copolymère est une saumure dont on a déjà enlevé une grande partie de la dureté dans une opération préalable d'élimination de la dureté.

**19.** Procédé conforme à la revendication 18, dans lequel ladite opération préalable d'élimination de la dureté comporte la mise en contact intime de ladite saumure et de perles échangeuses d'ions, qui enlève la majeure partie de la dureté.

**20.** Procédé conforme à la revendication 14, dans lequel l'amine est du chlorure de 1-chloro-2-hydroxypropyl-triméthylammonium.

**21.** Copolymère d'éthylène et d'acrylate de 1-chloro-2-hydroxypropyl-triméthylammonium, que l'on peut obtenir selon le procédé de la revendication 20.